(19) Europäisches Patentamt
European Patent Office
Office européen des brevets

(11) EP 4 525 012 A2

(12) **EUROPEAN PATENT APPLICATION**

(43) Date of publication:
**19.03.2025 Bulletin 2025/12**

(21) Application number: **25155161.0**

(22) Date of filing: **21.05.2021**

(51) International Patent Classification (IPC):
***H01G 4/18*** *(2006.01)*

(52) Cooperative Patent Classification (CPC):
(C-Sets available)
**C08J 5/18; C08F 110/06; H01G 4/18; H01G 4/32;**
C08J 2323/12 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2020 EP 20176697**

(62) Document number(s) of the earlier application(s) in accordance with Art. 76 EPC:
**21727149.3 / 4 157 928**

(71) Applicant: **Borealis AG**
**1020 Vienna (AT)**

(72) Inventors:
- **REZNICHENKO, Alexander**
**06101 Porvoo (FI)**
- **KERKHOFS, Hans**
**3583 Beringen (BE)**
- **WEHENKEL, Kristof**
**3583 Beringen (BE)**
- **VERWIMP, Werner**
**3583 Beringen (BE)**
- **GLOGER, Dietrich**
**4021 Linz (AT)**

(74) Representative: **Kador & Partner Part mbB**
**Corneliusstraße 15**
**80469 München (DE)**

Remarks:
This application was filed on 31-01-2025 as a divisional application to the application mentioned under INID code 62.

(54) **BOPP FILM FOR USE IN CAPACITOR**

(57) The present invention relates to a new BOPP film for use in a capacitor film, a new polypropylene homopolymer and a process for manufacturing the polypropylene homopolymer.

EP 4 525 012 A2

(52) Cooperative Patent Classification (CPC): (Cont.)

C-Sets
**C08F 110/06, C08F 4/6494;**
C08F 110/06, C08F 2500/15, C08F 2500/26,
C08F 2500/12, C08F 2500/34, C08F 2500/35

## Description

The present invention relates to a new BOPP film for use in a capacitor film.

## Background Information

Polypropylene is used in many applications and is for instance the material of choice in the field of film capacitors as its chain lacks any kind of polar groups, which orient under electrical field stress. Recently, various types of electric equipment have been incorporating inverters, and along with this trend, demands have been growing for capacitors smaller in size and enhanced in capacitance. Because of these demands from the market, biaxially oriented polypropylene (BOPP) films, which are thinner and improved in both mechanical properties and electrical properties, are preferably used in the field of capacitor applications.

Capacitor films must withstand extreme conditions like high temperatures and must have high dielectrical breakdown strength. Additionally it is appreciated that capacitor films possess good mechanical properties like a high stiffness and also high operating temperatures. The upper 43% of the total capacitor film grades, namely for power applications such as welding, e-vehicles, trains, ovens, windmills, solar panels etc., is using high isotactic polypropylene (HIPP) resins. Apart from balanced shrinkage and optimised surface roughness, the main advantage associated with the high isotacticity is the high heat resistance of the final film, relating to the high crystallinity, the high onset temperature of the melting and the high peak melting temperature. Therefore, the latest efforts in the field are improving the crystallinity and heat resistance of the material. Further, polymers and films suitable for capacitor applications having increased electrical properties, esp. in the sense of resistance to break down, are particularly desired.

## Description of the prior art:

It was described in EP 2701165 A1 and EP 2684676 A1 that polypropylene having a chain backbone with side branches, which is known to enhance the crystallization process of linear polypropylene, is contained in the polypropylene resin to increase the melting temperature and heat resistance of the final BOPP film.

However, the increase of crystallinity and melting point of the base resin associated with the addition of branched polypropylene makes the material too stiff and typically reduces the toughness, i.e. the elongation at break, of the BOPP film prepared from such resin. This causes severe disadvantages during the BOPP producing process, for example, the increasing likeliness of film breaks during the BOPP production.

Thus, there is still a need in the art for providing improved BOPP films for use in capacitor.

## Object of the invention

It is therefore the object of the present invention to provide such an improved film featuring improved capacitor properties such as durability and/or resilience to breakdown.

The present invention thus concerns a biaxially oriented polypropylene film comprising a polypropylene composition, wherein the polypropylene composition comprises a homopolymer of propylene (A) having a content of isotactic pentad fraction of from 93.0 to 98.0 %, a melt flow rate $MFR_2$ according to ISO 1133 from 0.4 to 10.0 g/10 min, an aluminium content of more than 0.0 ppm, a titanium content of more than 0.0 ppm and an ash content of more than 0.0 to 50.0 ppm, all based on the total amount of the polypropylene composition, characterized in that the ash contains more than 0.0 up to at most 25.0 wt.-%, based on the total amount of the ash content, of metals selected from elements in IUPAC groups 4 up to and including group 13 of the periodic table.

Viewed from another aspect the invention provides a process for producing the polypropylene as comprised by the polypropylene composition and the biaxially oriented polypropylene film.

Viewed from another aspect the invention provides the use of the polypropylene of the present invention for capacitor films or in capacitor applications.

The present invention also concerns a capacitor comprising an insulation film wherein at least one layer of said film comprises the biaxially oriented polypropylene according to the invention.

In the following the present invention is described in more detail.

## Detailed description:

The polypropylene compositions according to the invention may contain up to 100 wt.-% of a propylene homopolymer (A). This is about the maximum reasonable content of component A where the respective amounts of the remaining components are still sufficiently high to achieve the desired effects.

Accordingly, preferred polypropylene compositions of the invention comprise 95.0-99.9, preferably 96.0-99.7

wt.-%, more preferably 97.0-99.5 wt.-%, like 98.5-99.0 wt.-% of polypropylene homopolymer (A).

The polypropylene composition may further comprise from 0.01 to equal or below 1.0 wt.-%, based on the total weight of the polypropylene composition, of conventional additives. The additives may be selected from antioxidants, stabilizers, acid scavengers, and mixtures thereof.

As usual, 1 ppm of additive corresponds to 1 mg additive in 1 kg polypropylene composition.

Preferably, the polypropylene compositions consists of the propylene homopolymer (A). It is envisaged in the present invention that conventional additives may be present, even in case, the composition is defined in a closed way using "consisting of" wording.

The expression homopolymer used in the instant invention relates to a polypropylene that consists substantially, i.e. of at least 99.5 wt.-%, more preferably of at least 99.8 wt.-%, of propylene units. In a preferred embodiment, only propylene units in the propylene homopolymer (H-PP) are detectable. The comonomer content can be determined with $^{13}C$ NMR spectroscopy, as described below in the examples.

Further, it is appreciated that the propylene homopolymer (A) is a linear polypropylene. Furthermore, it is preferred that the propylene homopolymer (A) of the present invention has a melt flow rate (MFR) given in a specific range. The melt flow rate measured under a load of 2.16 kg at 230 °C (ISO 1133) is denoted as $MFR_2$ (230 °C). Accordingly, it is preferred that in the present invention the polypropylene homopolymer (A) has an $MFR_2$ (230 °C) of at least 0.4 g/10min, preferably at least 1.5 g/10min, more preferably of at least 2.5 g/10min. Accordingly it is appreciated that the $MFR_2$ (230 °C) measured according to ISO 1133 of the polypropylene homopolymer (A) is in the range of 0.4 to 10.0, preferably 1.5 to 10.0 g/10min, more preferably in the range of 2.5 to 6.0 g/10min, like in the range of 2.5 to 4.5 g/10min.

One important aspect in capacitor films is the low ash content, otherwise the dielectric properties are negatively affected. Accordingly it is appreciated, that the ash content of the polypropylene homopolymer (A) and/or of the composition and accordingly in the biaxially oriented polypropylene film is rather low.

So the polypropylene homopolymer (A) and/or the composition as well as the film may have an ash content of more than 0.0 to 50.0 ppm, preferably in the range of 1.0 - 40.0 or 4.0 - 30.0 ppm, like 7.0 to 20 ppm.

To ensure sufficient dielectric breakdown field strength, the total amount of metals in the ash may be low.

The total amount of metals (summed up) in the ash shall be at most 25.0 wt.-%, preferably in the range of more than 0.0 to 25.0 wt.-%, like in the range of 1.0 - 20.0 or 3.0 to 15.0 wt.-% based on the total amount of the ash content.

In the context of the present invention, metals are understood to be elements selected from the 4$^{th}$ (titan-group) up to and including 13$^{th}$ IUPAC group (boron group). Preferably, the metals are elements selected from the 4$^{th}$ and/or the 13$^{th}$ IUPAC group. In a preferred embodiment, the metals are aluminium and/or titan. Preferably, both aluminium and titan are present in the ash. In particular, aluminium and titan are the sole metals determinable in the ash.

Within the present invention, neither Calcium nor Magnesium are considered to be a metal.

In a preferred embodiment, the total amount of aluminium and titanium (summed up) in the ash may be at most 25.0 wt.-%, preferably it may be in the range of above 0.0 to 25.0 wt.-%, like in the range of 1.0 to 20.0 or 3.0 to 15.0 wt.-% based on the total amount of the ash content.

In an embodiment, the polypropylene homopolymer (A) as well as the film may have an aluminium content in the range of above 0.0 and equal or below 1.50 ppm, like in the range of 0.30 and equal or below 1.30 ppm, preferably in the range of 0.50 to equal or below 1.25 ppm

Independently from above, the propylene homopolymer (A) may have a titanium content of between equal or above 0 and equal or below 1.00 ppm, preferably in the range of 0.20 to equal or below 0.75 ppm, more preferably in the range of 0.30 to equal or below 0.70 ppm.

The polypropylene as well as the biaxially oriented polypropylene film of the present invention may have a specific weight ratio of the aluminium to the titan content. Ideally, the aluminium content is higher than the titan content.

The weight ratio of the aluminium to titan may be in the range of 0.8 - 3.0, preferably 1.0 - 2.5 or 1.2 - 2.0.

In a preferred embodiment of the present invention, the polypropylene homopolymer (A) is highly isotactic. Accordingly, it is appreciated that the polypropylene homopolymer (A) has a rather high pentad isotacticity <mmmm>, i.e. higher than 93.0 %, preferably higher than 96.0 %. Preferably, the isotacticity <mmmm> of the polypropylene homopolymer (A) is in the range of 93.0 to 99.6 %, more preferably 96.0 to 99.5 %, yet more preferably in the range of 96.0 to 98.5 %.

The melting temperature of the polypropylene homopolymer, the composition as well as the film may be at least 163.0 °C, like in the range of 163.0 - 170.0 °C, preferably in the range of 164.0 to 168.0 or in the range of 164.0 to 166.0 °C.

In a further preferred embodiment of the present invention, the polypropylene homopolymer (A) of the instant invention may be featured by rather low xylene cold soluble (XCS) content, i.e. by a xylene cold soluble (XCS) content of equal or below 2.0 wt.-%, more preferably of equal or below 1.8 wt.-%, yet more preferably equal or below 1.6 wt.-%. Thus it is in particular appreciated that the polypropylene homopolymer (A) of the instant invention has a xylene cold soluble (XCS) content in the range of 0.3 to equal or below 2.0 wt.-%, more preferably in the range of 0.3 to equal or below 1.8 wt.-%, yet more preferably in the range of 0.4 to equal or below 1.6 wt.-%.

The amount of xylene cold soluble (XCS) additionally indicates that the polypropylene homopolymer (A) is

preferably free of any elastomeric polymer component, like an ethylene propylene rubber. In other words, the polypropylene (PP) shall be not a heterophasic polypropylene, i.e. a system consisting of a polypropylene matrix in which an elastomeric phase is dispersed. Such systems are featured by a rather high xylene cold soluble content.

The polypropylene homopolymer used for making the biaxially oriented polypropylene film of the present invention may also be characterized by its decaline soluble fraction. The decaline soluble fraction of the polypropylene homopolymer may be in the range of 0.0 to 3.5 wt.-%, like in the range of 1.0 to 3.0 or 1.3 to 2.5 wt.-%.

The biaxially oriented polypropylene (BOPP) film according to the invention may comprise at least 80.0 wt.-%, more preferably comprises at least 90.0 wt.-%, yet more preferably consists of, the polypropylene composition as defined in the present invention.

Accordingly, given that the biaxially oriented polypropylene film of the present invention is predominantly formed by the propylene composition and the propylene homopolymer respectively, it is understood within the scope of the present invention, that properties disclosed for the polymer and the composition apply also for the film and vice versa.

The dielectrical breakdown field strength ($E_b$63.2) is measured according to DIN IEC 60243-2 and evaluated according to a method described in detail in IEEE Transactions on Dielectrics and Electrical Insulation (2013), Vol. 20(3), pp. 937-946.

The dielectrical breakdown field strength was obtained as the Scale parameter $\alpha$ of a fitted two-parameter Weibull distribution based on 50 results, measured with active electrode area of 2.84 $cm^2$ using 250 V/s DC voltage ramp rate on films with a thickness of 3.8-4.2 $\mu$m.

In an embodiment, the film may have a dielectric breakdown field strength Eb63.2 of between 550 to 630 $kJ/m^2$/mm, preferably 570 kV/mm and 620 kV/mm, preferably between 580 kV/mm and 610 kV/mm.

Additionally, the biaxially oriented polypropylene (BOPP) film of the instant invention can be employed in capacitor films. In such cases, the capacitor film comprises at least 80.0 wt.-%, more preferably at least 90.0 wt.-%, yet more preferably at least 99.0 wt.-% of the polypropylene composition or of the biaxially oriented polypropylene (BOPP) film. In an especially preferred embodiment, the capacitor film consists of the polypropylene composition or of the biaxially oriented polypropylene (BOPP) film according to this invention.

Preferably, the biaxially oriented polypropylene (BOPP) film may have a stretching ratio of at least 4 times, preferably at least 5 times, in the machine direction and at least 4 times, preferably at least 5 times, in the transverse direction, more preferably has the stretching ratio of at least 9 times in the machine direction and at least 5 times in the transverse direction.

The film may be stretched simultaneously in machine direction and transverse direction.

The capacitor film, i.e. the biaxially oriented polypropylene (BOPP) film, can be prepared by conventional drawing processes known in the art. Accordingly, the process for the manufacture of a capacitor film, i.e. the biaxially oriented polypropylene (BOPP) film, according to this invention comprises the use of the polypropylene composition as defined herein and its forming into a film preferably by the tenter method known in the art.

The tenter method is in particular a method in which the polypropylene composition as defined herein is melt extruded from a slit die such as a T-die and cooled on a cooling drum obtaining an undrawn sheet. Said sheet is pre-heated for example with a heated metal roll and then drawn in the length direction between a plurality of rolls over which a difference in peripheral speeds is established and then both edges are gripped with grippers and the sheet is drawn in the transverse direction in an oven by means of a tenter resulting in a biaxially drawn film. The temperature of said stretched sheet during the longitudinal drawing is preferably controlled in such a way as to be within the temperature range of the melting point of the polypropylene as defined herein (machine direction: -30 to -10 °C; transverse direction: -5 to +10 °C).

Subsequently, the capacitor film, i.e. the biaxially oriented film (BOPP), can be treated by corona discharge in air, nitrogen, carbon dioxide gas or any of the mixtures on the surface to be metalized, to improve the adhesive strength to the metal to be deposited, and wound by a winder.

The biaxially oriented polypropylene film of the present invention may have a thickness in the range of 0.5 - 15.0 $\mu$m, preferably in the range of 1.0 to 10.0 or 3.0 to 8.0 $\mu$m.

In a preferred embodiment, the biaxially oriented polypropylene film may have a thickness in the range of 1.0 to 5.0, like 2.0 - 4.0 $\mu$m.

In a similarly preferred embodiment, the biaxially oriented polypropylene film may have a thickness in the range of 3.0 to 10.0 $\mu$m, like 4.0 to 8.0 or 5.0 to 7.0 $\mu$m.

In an embodiment, the film may comprise a layer consisting of the polypropylene composition. Optionally, the film may also comprises a metal layer.

The present invention also concerns a capacitor comprising an insulation film comprising a layer of the biaxially oriented polypropylene film according to the invention, wherein the film may optionally comprise a metal layer.

The invention further concerns a process for producing a biaxially oriented polypropylene film comprising the steps of:

(1) providing a polypropylene composition comprising of

a homopolymer of propylene (A) having a content of isotactic pentad fraction of from 93.0 to 98.0 % and a melt flow rate $MFR_2$ of from 0.4 to 10.0 g/10.0 min, and having an aluminium content of more than 0.0 ppm, optionally up to 1.50 ppm and
a titanium content of more than 0.0 ppm, optionally up to 1.00 pppm, and
an ash content of 0.0 - 50.0 ppm, all based on the total amount of the polypropylene composition,
characterized in that the ash contains more than 0.0 up to at most 25.0 wt.-%, preferably 1.0 - 20.0 wt.-% or 3.0 - 15.0 wt.-% , based on the total amount of the ash content, of metals (summed up) selected from elements in IUPAC groups 4 up to and including 13 of the periodic table, the metals preferably being aluminium and titan,

(2) extruding the polypropylene composition to a flat film or sheet,
(3) orienting the flat film simultaneously in the machine direction and in the transverse direction to obtain the biaxially oriented polypropylene film, and
(4) recovering the biaxially oriented polypropylene film, the film optionally having a dielectric breakdown field strength Eb63.2 of between 550 kV/mm and 630 kV/mm, which is obtained as the Scale parameter $\alpha$ of a fitted two-parameter Weibull distribution based on 50 results, measured with active electrode area of 2.84 cm2 using 250 V/s DC voltage ramp rate on films with a thickness of 3.8-4.2 $\mu$m.

In an embodiment of the process, the polypropylene composition further comprises equal or above 99.0 wt.-%, based on the total weight of the polypropylene composition, of the homopolymer of propylene.
In a further embodiment of the process, the polypropylene composition may further comprise from 0.01 to 1.0 wt.-%, based on the total weight of the polypropylene composition, of additives.
In a further embodiment of the process, the simultaneous orientation of the flat film in the machine direction and in the transverse direction to obtain the biaxially oriented polypropylene film is conducted in a continuous process.
In a further embodiment of the process, the biaxially oriented polypropylene film is a film according to the invention.

**Polymerisation process**

The present invention further concerns a slurry polymerisation process for the preparation of a polypropylene homopolymer (A) having a decaline soluble content in the range of 0.0 to 3.5 wt.-%, preferably in the range of 1.0 to 3.0 wt.-% , more preferably in the range of 1.3 to 2.5 wt.-%, wherein the catalyst system comprises:

a) A Ziegler-Natta catalyst
b) Organoaluminum cocatalyst
c) External donor of the formula (I)

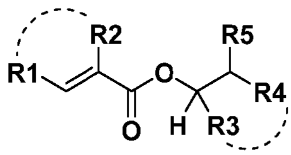
(I),

wherein

R1 and R2 are independently H or $C_1$-$C_3$ saturated or unsaturated hydrocarbyl, optionally linked together to give one or more cyclic structures;
R3 and R4 are independently H or $C_1$-$C_4$ hydrocarbyl, optionally linked together to give one or more cyclic structures;
R5 is H or $C_1$-$C_{12}$ hydrocarbyl,
with the provision that a least one radical of $R_3$-$R_5$ is not a hydrogen.

The polypropylene homopolymer (A) produced in the process of the present invention may have a rather high pentad isotacticity <mmmm>, i.e. higher than 93.0 %, preferably higher than 96.0 %, more. Preferably, the isotacticity <mmmm> of the polypropylene homopolymer (A) is in the range of 93.0 to 99.6 %, preferably 96.0 to 99.5 %, preferably in the range of 96.0 to 98.5 %.
Polymerisation process in described in the present invention can be a uni- or multimodal slurry polymerisation process for producing polypropylene. Typically, propylene (co)polymers are produced in commercial scale in a multimodal process configuration. Such multimodal polymerisation processes known in the art comprise at least two polymerisation

stages. It is preferred to operate the polymerisation stages in cascaded mode. In one preferred embodiment, the multimodal polymerisation configuration comprises at least three slurry reactors operated in a cascaded mode.

The polymerisation in slurry may take place in an inert diluent, typically a hydrocarbon diluent such as methane, ethane, propane, n-butane, isobutane, pentanes, hexanes, heptanes, octanes, dodecanes etc., or their mixtures. Preferably, the diluent is a high boiling hydrocarbon having from 10 to 14 carbon atoms, like dodecane or a mixture of such hydrocarbons. In propylene polymerisation the monomer is often used as the reaction medium.

The temperature in the slurry polymerisation is typically from 40 to 115 °C, preferably from 60 to 110 °C and in particular from 65 to 90 °C. The pressure is from 1 to 150 bar, preferably from 5 to 80 bar.

The slurry polymerisation may be conducted in any known reactor used for slurry polymerisation. Such reactors include a continuous stirred tank reactor and a loop reactor. It is especially preferred to conduct the polymerisation in a stirred tank reactor. Hydrogen is fed, optionally, into the reactor to control the molecular weight of the polymer as known in the art. The actual amount of hydrogen feed depends on the desired melt index (or molecular weight) of the resulting polymer.

The catalyst system used in a present invention is based on a Ziegler-Natta catalyst comprising compound of Group 2 metal, compound of Group 4 to 10 transition metal, or of a lanthanide or actinide, optionally a compound of Group 13 metal and optionally an internal electron donor.

The compound of Group 2 metal is preferably a magnesium compound, like magnesium halide, especially magnesium dichloride.

The transition metal compound is preferably a compound of Group 4 to 6, more preferably a Group 4 transition metal compound or a vanadium compound and is still more preferably a titanium compound. Particularly preferably the titanium compound is a halogen-containing titanium compound of the formula $X_yTi(OR^8)_{4-y}$, wherein $R^8$ is a $C_{1-20}$ alkyl, preferably a $C_{2-10}$ and more preferably a $C_{2-8}$ alkyl group, X is halogen, preferably chlorine and y is 1, 2, 3 or 4, preferably 3 or 4 and more preferably 4. Suitable titanium compounds include trialkoxy titanium monochloride, dialkoxy titanium dichloride, alkoxy titanium trichloride and titanium tetrachloride, and titanium tetrachloride.

Even more preferably, the titanium compound is $TiCl_3$.

As internal electron donors, if comprised in the catalyst, the following compounds are suitable among others, (di) esters of carboxylic (di)acids, like methacrylates, phthalates or (di)esters of non-phthalic carboxylic (di)acids, ethers, diethers or oxygen or nitrogen containing silicon compounds, or mixtures thereof.

The polymerisation process of the invention comprises, in addition to the Ziegler-Natta catalyst as defined above, a cocatalyst, which is also known as an activator, and optionally an external electron donor. Cocatalyst and the external electron donor are fed separately to the polymerisation process, i.e. they are not part of the solid Ziegler-Natta catalyst.

Cocatalysts are organometallic compounds of Group 13 metal, typically aluminium compounds. These compounds include aluminium alkyls and alkyl aluminium halides. Preferably, the alkyl group is a C1-C8 alkyl group, preferably C1-C4 alkyl group, and the halide is a chloride. Preferably, the co-catalyst is a tri (C1-C4) alkylaluminium, di(C1-C4)alkyl aluminium chloride or (C1-C4)alkyl aluminium dichloride or mixtures thereof. Most preferably, the alkyl group is ethyl. In one specific embodiment, the co-catalyst is diethylaluminum chloride (DEAC).

ad c) External donor:

In a preferred embodiment, each of the R1 and R2 and R3 may be - independently from each other -, H or methyl, and R4 and R5 may be independently from each other selected from $C_1$-$C_4$ hydrocarbyl, in particular $C_1$-$C_2$ hydrocarbyl.

Alternatively preferred are 2-ethylhexylmethacrylate (EHMA) or isobutylmethacrylate (iBMA) as external donors, the latter one especially preferred.

In one embodiment, the homopolymer of propylene (A) is obtainable, optionally obtained, by the process set out above.

Accordingly, the biaxially oriented polypropylene film of the present invention comprises a polypropylene composition, which comprises a homopolymer of propylene (A) obtainable, optionally obtained, by the process set out above.

The present invention will now be described in further detail by the examples provided below:

## Examples:

The following definitions of terms and determination methods apply for the above general description of the invention as well as to the below examples unless otherwise defined.

### Measuring methods

#### $MFR_2$ (230 °C)

Melt flow rate $MFR_2$ is measured according to ISO 1133 (230 °C, 2.16 kg load).

**Xylene cold soluble fraction (XCS wt.-%)**

The xylene cold soluble fraction (XCS) is determined at 23 °C according to ISO 6427.

**Decaline soluble fraction (DS)**

A 2 g polymer sample is dissolved in 100ml stabilised decahydronaphthalene ( = decaline) by heating at 160 °C and stirring for 1 hr. The solution is cooled at room temperature for one hour and then placed in a water bath at 25 °C for 1 hour. The solution is filtrated. 20 ml of the filtrate is transferred quantitatively in a tarred aluminum pan. The pan is placed on a hot plate at 195°C, blanketed with a slow stream of nitrogen. When the residue in the pan is almost dry, the pan is placed in a vacuum oven at 140 °C for 2 hours. The total solids concentrate of the filtrate is as a measure for the soluble fraction.
Calculated as decaline soluble = {(gram of residue)/(gram of sample)}x5x 100 %.

**Differential scanning calorimetry (DSC)**

Differential scanning calorimetry (DSC) analysis, melting temperature ($T_m$) and melt enthalpy ($H_m$), crystallization temperature ($T_c$), and heat of crystallization ($H_c$, $H_{CR}$) are measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225 °C. Crystallization temperature ($T_c$) and heat of crystallization ($H_c$) are determined from the cooling step, while melting temperature ($T_m$) and melt enthalpy (Hm) are determined from the second heating step.

**GPC**

Molecular weight averages (Mw, Mn), and the molecular weight distribution (MWD), i.e. the ratio of Mw/Mn (wherein Mn is the number average molecular weight and Mw is the weight average molecular weight), were determined by Gel Permeation Chromatography (GPC) according to ISO 16014-4:2003 and ASTM D 6474-99. A PolymerChar GPC instrument, equipped with infrared (IR) detector was used with 3 x Olexis and Ix Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 μL of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

**Ash content:**

The ash content of the polymer was determined gravimetrically by determining the relative weight, parts per million, of burning residue of the original polymer.
The burning residue was obtained in a two-step combustion process of the polymer sample in a platinum crucible.
The empty crucible is first heated to 1000 °C for 15 minutes in a muffle furnace, then allowed to cool for 3 hours in a desiccator.

> The weight of the crucible is then determined on an analytical scale with detection limit of 0.0001 g. (Result A) 100g of the polymer sample is then weighed into the crucible using an analytical scale with detection limit of 0.0001 g (Result B)

The crucible holding the sample is heated in a Bunsen burner flame so that the polymer slowly oxidizes into an ash residue.
The crucible with the ash reside is then heated to 1000 °C for 15 minutes in a muffle furnace, then allowed to cool for 3 hours in a desiccator.
The ash content is determined by weighing the crucible on an analytical scale detection limit of 0.0001 g (Result C).
The ash content (ppm) is [(C-A)/B]*1 000 000 then the weight of the residue divided by the weight of the polymer sample.
The ash content as determined above is done in replicate and the average is reported. If the difference between the measurements is more than 7 ppm then a third measurement is made.

The metal content of the ash is understood as the summed up amounts of metal residues in relation to the amount of the ash residue.

**Quantification of aluminium and titan:**

Titanium (Ti) and aluminium (Al) are determined with ICP-OES, Inductively coupled plasma with optical emission spectrometry (Optima 2000DV) from an acid digest of the residue and using acid standards. Ti and Al content are reported as ppm. Preparation of the acid digest: The residue is obtained from 25 g of the polymer, wetted with 10 ml of a sulphuric acid - acetic acid mixture (10 ml $H_2SO_4$ in 400 ml acetic acid). The wetted sample is burned on a quartz dish by direct ignition. The obtained residue is then further heated for 30 minutes in a muffle furnace held at 625°C. The residue, after cooling, is dissolved in 20ml aqueous HCl (500 ml HCl 37 % 1500 demineralized water) and filtered through a Whatmann 41 filter. The liquid phase is diluted to 100 ml with demineralized water. This digest is analysed by ICP-OES .

**Quantification of microstructure by NMR spectroscopy**

Quantitative nuclear-magnetic resonance (NMR) spectroscopy was used to quantify the isotacticity and comonomer content of the polymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

For polypropylene homopolymers approximately 200 mg of material was dissolved in *1,2*-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromoleucles 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra For ethylene-propylene copolymers approximately 200 mg of material was dissolved in 3 ml of *1,2*-tetrachloroethane-$d_2$ (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme(Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 6144 (6k) transients were acquired per spectra.

Quantitative $^{13}C\{^1H\}$ NMR spectra were processed, integrated and relevant quantitative properties determined from the integrals using proprietary computer programs.

For ethylene-propylene copolymers all chemical shifts were indirectly referenced to the central methylene group of the ethylene block (EEE) at 30.00 ppm using the chemical shift of the solvent. This approach allowed comparable referencing even when this structural unit was not present.

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253;; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest(Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm] \% = 100 * ( mmmm / \text{sum of all pentads} )$$

The mole fraction of ethylene in the polymer was quantified using the method of Wang et. al. (Wang, W-J., Zhu, S., Macromolecules 33 (2000), 1157) through integration of multiple signals across the whole spectral region of a $^{13}C\{^1H\}$ spectra acquired using defined conditions. This method was chosen for its accuracy, robust nature and ability to account for the presence of regio-defects when needed. Integral regions were slightly adjusted to increase applicability to a wider range of comonomer contents.

The mole percent comonomer incorporation in the polymer was calculated from the mole fraction according to:

$$E [mol\%] = 100 * fE$$

The weight percent comonomer incorporation in the polymer was calculated from the mole fraction according to:

$$E [wt\%] = 100 * ( fE * 28.05 ) / ( (fE * 28.05) + ((1-fE) * 42.08) )$$

The comonomer sequence distribution at the triad level was determined using the method of Kakugo et al. (Kakugo, M., Naito, Y., Mizunuma, K., Miyatake, T. Macromolecules 15 (1982) 1150) through integration of multiple signals across the whole spectral region of a $^{13}C\{^1H\}$ spectra acquired using defined conditions. This method was chosen for its robust nature. Integral regions were slightly adjusted to increase applicability to a wider range of comonomer contents.

The mole percent of a given comonomer triad sequence in the polymer was calculated from the mole fraction determined by the method of Kakugo et at. (Kakugo, M., Naito, Y., Mizunuma, K., Miyatake, T. Macromolecules 15 (1982) 1150) according to:

$$XXX [mol\%] = 100 * fXXX$$

**Dielectrical breakdown strength**

Breakdown test and electrode design:
The dielectric breakdown strength was determined in general agreement with DIN IEC 60243-2 using direct current (DC), voltage ramp rate of 250 V/s and active electrode area of 2.84 $cm^2$ which follows from the cylindrically shaped electrode diameter (2.5 cm) reduced by 0.6 cm because of a 0.3 cm edge radius (Cylinder / Plate setup of IEC 60243-1 and -2).

The IEC 60243-2 standard electrode design was used with the modification of placing the BOPP film between the upper cylinder electrode and a pad foamed elastomer (e.g a mousepad) wrapped with alumina foil placed on the ground electrode.

The dielectrical breakdown field strength was evaluated according to a method described in detail in IEEE Transactions on Dielectrics and Electrical Insulation (2013), Vol. 20(3), pp. 937-946 .

The dielectrical breakdown field strength was obtained as the Scale parameter $\alpha$ of a fitted two-parameter Weibull distribution based on 50 results, measured with active electrode area of 2.84 $cm^2$ using 250 V/s DC voltage ramp rate on films with a thickness of 3.8-4.2 $\mu$m.

On each BOPP film, the breakdown strength was measured 50 times as described in the following. The 50 breakdown measurements were distributed over a BOPP film area of approximately 2.5 $m^2$ by measuring according to a 10 $\times$ 5 grid, i.e. a row of 10 breakdowns across the TD width and in total measuring 5 such rows along MD of the BOPP film.

To accomplish this measurement plan, BOPP film specimens were cut from the 50 grid positions, and broken down individually with the electrode design as described above. The film side opposite of the chill roll was facing the upper electrode. Breakdowns outside the active electrode area via a spark were discarded. After a breakdown had occurred the film thickness was measured three times around the breakdown hole and averaged. The breakdown (field) strength $E_b$ (kV/mm) is voltage at breakdown (kV) divided by averaged specimen thickness d (mm).

*Statistical evaluation*

To evaluate a breakdown distribution, DBD, IEC 62539 recommends extreme value distributions, such as the two-parameter Weibull distribution (2-Weibull), the 3-parameter Weibull distribution (3-Weibull), the lognormal distribution and the 1st asymptotic extreme value distribution (1AEV). Generally, when the breakdown mechanism is not known, a statistical distribution is primarily chosen via fitting quality. However, most authors use the Weibull distribution, of which the cumulative density distribution function for the three-parameter variant is given by equation 1:

$$F(E_b) = 1 - exp\left\{-\left[\frac{E_b - \delta}{\alpha}\right]^{\beta}\right\}$$

**Equation 1:** Cumulative density function of the Weibull distribution with three parameters α (Scale), β (Shape) and δ (Location)

$$F(E_b) = 1 - exp\left\{-\left[\frac{E_b}{\alpha}\right]^{\beta}\right\}$$

**Equation 2:** Cumulative density function of the Weibull distribution with two parameters α (Scale), β (Shape)

Therein $F(E_b)$ is the cumulative failure probability at the breakdown field $E_b$, $\alpha$ is the Scale parameter representing the distribution average, $\beta$ is the Shape parameter representing dispersion, and $\delta$ is the location parameter, by some called the threshold parameter. This form of the Weibull distribution (3-Weibull) assumes zero failure probability when the applied field is lower that the threshold, i.e. $F(E_b) = 0$, for $E_b < \delta$. This form of the Weibull distribution is rarely used as most authors assume $\delta = 0$, i.e. failure can possibly occur at any applied field ($F(E_b) > 0$ for $E_b > 0$ (Equation 2).

Herein the two parameter Weibull distribution is used and Shape parameter $\alpha$ is reported as Eb63.2 as the (average) breakdown strength of the BOPP film. To obtain Eb63.2 ($\alpha$) a fitting procedure is required, i.e. the two parameters $\alpha$ and $\beta$ are varied so that the fitted Weibull distribution matches the experimental data best. This procedure can be performed as a general function of graphing software (e.g. Origin) or of statistical software packages (e.g. Minitab).

**Material description:**

Raw materials:

Methyl methacrylate, ethyl methacrylate, 2-ethylhexylmethacrylate, isobutylmethacrylates and tert-butyl methacryalate were provided by Sigma-Aldrich and were additionaly sparged with argon prior to use as external donors in polymerisation. Diethylaluminium chloride (DEAC) cocatalyst was provided by Chemtura and used as a 10% solution in decane.

Lynx900 catalyst was provided by Grace and used as received.

**Polymerisation conditions for the samples in table 1:**

The polymerisation procedure was carried out using a Parallel Pressure Reactor (PPR) in following protocol: The catalyst slurries in dodecane were preactivated overnight (~18 hours) by adding a target amount of aluminium activator (DEAC, as a solution in decane) and external donor as a solution in decane. The slurry mixtures were shaken well and let to stand in glove box overnight. The actual polymerisation process was started on following day by evacuating and purging the reactor cells with gaseous propylene ten times. Following this, solvent (decane) and scavenger (DEAC) were added to a sum volume of 4.1 ml. The system was then pressurised to 40 psi (2.8 bar) with propylene over two stages. Following this, an appropriate portion of hydrogen, in the form of a $H_2/N_2$ mixture, was added. After $H_2$ addition the reactors were heated up to 70 °C and the temperature and pressures were let to stabilize. Preactivated catalyst slurries were homogenized on stir plate shaking at 1500 rpm. Aliquot of the slurries were transferred into the cells one at a time with a robotic arm equipped with a needle.

Additional decane was dosed simultaneously as chaser to bring the total volume of liquid to 5 ml in the reactor. Each catalyst addition was followed by a needle washing step. The additional solvent decreased the pressure inside the cells slightly; hence the pressure was increased back to 89 psi with additional gaseous $C_3$ and kept in that level throughout the polymerisation. The polymerisation was continued for 120 min before being quenched by raising the pressure to 200 psi (13.8 bar) with $CO_2$. The reactors were left to cool and were slowly vented and purged with nitrogen. All 48 vials were removed and then transferred to the Genevac, a heated, evacuated centrifuge, where the solvent was evaporated overnight. The following day the vials were weighed and compared to their original value to obtain the yield.

**Inventive example IE1a - IBMA**

Lynx900 catalyst was polymerised with isobutylmethacrylate (iBMA) as an external donor, Donor:Ti ratio was 0.4 mol/mol, DEAC:Ti ratio was 6 mol/mol.

The average catalytic activity from 6 cells was 0.27 g PP/mg cath, Mw 543000 g/mol. The polymer collected was characterized with a melting point of 165 °C and the NMR pentad isotacticity was 96.49 % *mmmm.* Thus, a combination of high Mw and isotacticity (C2) with high activity as in C1 was obtained with this inventive donor. Example IE1a was produced in lab scale, example IE1b of table 2 was produced accordingly in bigger scale.

**Inventive example IE2 - EHMA**

Lynx900 catalyst was polymerised with 2-ethylhexylmethacrylate (EHMA) as an external donor, Donor:Ti 0.4 mol/mol, DEAC:Ti 6 mol/mol.

The average catalytic activity from 6 cells was 0.28 g PP/mg cath, Mw 553000 g/mol.. Polymer collected was characterized with Melting point (Mp) of 164.8 ° Again a combination of high Mw and isotacticity (C2) with high activity (C1) was obtained with this inventive donor.

**Comparative example C1**

Lynx900 catalyst was polymerised without any external donor with Diethylaluminum chloride (DEAC):Ti ratio of 6 mol/mol.

The average catalytic activity from 6 cells was 0.20 g PP/g cath, Mw 403000. The polymer collected was characterized with a melting point (Mp) of 161 °C and the NMR pentad isotacticity was 92.73 %.

**Comparative example C2a MMA**

Lynx900 catalyst was polymerised with methyl methacrylate (MMA) as an external donor, Donor:Ti ratio was 0.4 mol/mol, DEAC:Ti ratio was 6 mol/mol.

The average catalytic activity from 6 cells was 0.135 g PP/mg cath, Mw 507000 g/mol. The polymer collected was characterized with a melting point (Mp) of 164.1 °C and the NMR pentad isotacticity was 96.77 %.

Example CE2a was produced in lab scale, example CE2b of table 2 was produced accordingly in bigger scale.

**Comparative example C3 EMA**

Lynx900 catalyst was polymerised with ethyl methacrylate (EMA) as an external donor, Donor:Ti ratio was 0.4 mol/mol, DEAC:Ti ratio was 6 mol/mol.

The average catalytic activity from 6 cells was 0.177 g PP/mg cath, Mw 493000 g/mol. The polymer collected was characterized with melting point (Mp) of 163.7 °C. The polymer produced with EMA as C3 showed similar low activity/high Mw balance as the polymer produced with MMA as C2.

**Comparative example C4 TBMA**

Lynx900 catalyst was polymerised with highly sterically encumbered ter-butyl methacrylate (TBMA) as an external donor, Donor:Ti ratio was 0.4 mol/mol, DEAC:Ti ratio 6 mol/mol.

The average catalytic activity from 6 cells was 0.34 g PP/mg cath, Mw 430000 g/mol. The polymer collected was characterized with a melting point (Mp) of 161.1 °C. The results were thus similar to donor-free example C1, where low Mw and low isotacticity material was produced.

*Table 1 Polymer properties (lab scale)*

| | | IE1a | IE2 | C1 | C2a | C3 | C4 |
|---|---|---|---|---|---|---|---|
| Donor | | IBMA | EHMA | none | MMA | EMA | TBMA |
| Mw [kg/mol] | Kg/mol | 543 | 553 | 403 | 507 | 493 | 430 |
| Melting temperature | °C | 165.1 | 164.8 | 161.0 | 164.1 | 163.7 | 161.1 |
| NMR pentad isotacticity <mmmm> | % | 96.5 | - | 92.7 | 96.8 | - | - |
| Yield (PP/cat) | g/mg | 0.27 | 0.28 | 0.20 | 0.135 | 0.177 | 0.34 |

As exemplified in IE1a and IE2, the inventive process provides higher yield and allows the production of polypropylenes having both high molecular weight (Mw), higher melting temperature combined with high isotacticity and - as shown in table 2 below - less amounts or catalyst residues in the polymer due to the higher yield.

**Polymerisation of the materials of table 2 and used for producing films:**

Reference resin examples CE2b has been produced according to the description Comparative Example CE2 of the EP2543684A.

Inventive examples IE1 and IE2 of the present invention have been produced as the reference examples however isobutyl methacrylate was used instead of MMA in the catalyst preparation.

**Film productions:**

The polypropylene compositions were extruded through using the pilot scale biaxial orientation line owned and operated by Brückner Maschinenbau GmbH. Films were extruded at a rate of ca 30 kg/h onto a chill roll held at 90 °C into sheet of 180 μm thick with chill roll/film speed of 10 m/min. The film was fed at 10 m/min into the MDO unit which consisted of 12 rolls, of which the first six were heated from 95 to 130 °C to preheat the film, the subsequent two were held at 140 °C for drawing and the last four are held between 110-124 °C for annealing. The machine direction (MD) draw step was accomplished between the $8^{th}$ and $9^{th}$ roll, running rolls 9 to 12 at 50 m/min thereby creating the MDO or MD drawn film. The MDO film was continuously fed into the tenter frame using 180-175 °C for pre-heating, 175-165 °C for drawing and 165-170 °C for relaxation. In the tenter operation, the MD clip-to-clip distance was constant and the MDO film was only drawn in transverse direction (TD) in the diverging draw zone of the tenter. The engineering draw ratio in MD and TD was 5.0 by 9.0.

The film produced had a thickness of 3.9 +/- 0.1 μm.

*Table* 2 Polymer properties determined on big scale sample:

| | | IE1b | CE2b |
|---|---|---|---|
| Donor | | IBMA | MMA |
| MFR 230/2.16 | g/10 min | 3.3 | 3.5 |
| Ash Content | ppm | 12 | 12 |
| Al content | ppm | 0.7 | 2.4 |
| Ti content | ppm | 0.5 | 1.0 |
| Decaline solubles | Wt.-% | 1.4 | 1.2 |
| Metalcontent of ash | Wt.-% | 10 | 28.3 |
| Ratio Al / Ti | % | 1.4 | 2.4 |
| Dielectrical Breakdown strength (determined on film) | kV/mm | 607 | 587 |

It is shown, that the polymer as well as the biaxially oriented polypropylene film have lower amounts of aluminium and titan residues in the polymer as well as a lower metal content in the ash and provides better dielectrical break down strength. The object of the invention is achieved.

**In the following clauses, preferred embodiments of the invention are described:**

1. A biaxially oriented polypropylene film comprising a polypropylene composition, wherein the polypropylene

composition comprises a homopolymer of propylene (A) having

a content of isotactic pentad fraction of from 93.0 to 99.6 %
a melt flow rate $MFR_2$ according to ISO 1133 from 0.4 to 10.0 g/10 min,
an aluminium content of more than 0.0 ppm and
a titanium content of more than 0.0 ppm and
an ash content of more than 0.0 to 50.0 ppm, all based on the total amount of the polypropylene composition,

characterized in that the ash contains more than 0.0 up to at most 25.0 wt.-%, based on the total amount of the ash content, of metals selected from elements in IUPAC groups 4 up to and including 13 of the periodic table.

2. The biaxially oriented polypropylene film according to clause 1, wherein the metals are elements of group 4 and/or of group 13, preferably aluminium and/or titan and optionally present (summed up) in the range 1.0 - 20.0 wt.-% or 3.0 - 15.0 wt.-% based on the total amount of the ash content.

3. The biaxially oriented polypropylene film according to clause 1 or 2, wherein the polypropylene has an aluminium content between above 0.0 to 1.50 ppm, preferably in the range of 0.30 to 1.30, or 0.50 to 1.25 ppm, and/or a titanium content of between above 0.0 to 1.00, preferably in the range of 0.20 to 0.75 ppm or 0.30 to 0.70 ppm

4. The biaxially oriented polypropylene film according to any of the preceding clauses, wherein, wherein the ratio of aluminium to titan within the ash is in the range of 0.8 - 3.0, preferably 1.0 - 2.5 or 1.2 - 2.0 and/or
wherein the polypropylene composition has an ash content of 1.0 - 40.0 or 4.0 - 30.0 ppm.

5. The biaxially oriented polypropylene film according to any one of the preceding clauses, wherein the polypropylene composition comprises 95.0 to 99.9 wt.-% of the homopolymer of propylene (A) based on the total weight of the polypropylene composition. and/or the propylene homopolymer (A) has a pentad isotacticity of 96.0 to 98.5 %

6. The biaxially oriented polypropylene film according to any one of the preceding clauses, wherein the film comprises

a layer consisting of the polypropylene composition, optionally comprising a metal layer and/or
the film is stretched simultaneously in machine direction and transverse direction.

7. The biaxially oriented polypropylene film according to any one of the preceding clauses having a dielectric breakdown field strength $E_b$63.2, determined according to DIN IEC 60243-2 and obtained as the Scale parameter $\alpha$ of a fitted two-parameter Weibull distribution based on 50 results, measured with active electrode area of 2.84 $cm^2$ using 250 V/s DC voltage ramp rate on films with a thickness of 3.8-4.2 $\mu$m, of between 550 kV/mm and 630 kV/mm, preferably between 570 kV/mm and 620 kV/mm, or between 580 kV/mm and 610 kV/mm.

8. A capacitor comprising an insulation film comprising a layer of the biaxially oriented polypropylene film according to any of the preceding clauses.

9. Polypropylene homopolymer having

a content of isotactic pentad fraction of from 93.0 to 99.6 %
a melt flow rate $MFR_2$ according to ISO 1133 from 0.4 to 10.0 g/10 min,
an aluminium content of more than 0.0 ppm and
a titanium content of more than 0.0 ppm and
an ash content of 0.0 - 50.0 ppm, all based on the total amount of the polypropylene composition,
characterized in that the ash contains more than 0.0 up to at most 25.0 wt.-%, preferably 1.0 - 20.0 wt.-% or 3.0 - 15.0 wt.-% , based on the total amount of the ash content, of metals (summed up) selected from elements in IUPAC groups 4 up to and including 13 of the periodic table, the metals preferably being aluminium and titan.

10. Polypropylene homopolymer according to clause 9, having an aluminium content between above 0.0 to 1.50 ppm, preferably in the range of 0.30 to 1.30, or 0.50 to 1.25 ppm, and/or

a titanium content of between above 0.0 to 1.00, preferably in the range of 0.20 to 0.75 ppm or 0.30 to 0.70 ppm and/or
a ratio of aluminium to titan within the ash is in the range of 0.8 - 3.0, preferably 1.0 - 2.5 or 1.2 - 2.0

11. A process for producing a biaxially oriented polypropylene film comprising the steps of:

(A) providing a polypropylene composition comprising of

a homopolymer of propylene (A) having a content of isotactic pentad fraction of from 93.0 to 98.0 % and a melt flow rate $MFR_2$ of from 0.4 to 10.0 g/10.0 min, and having
an aluminium content of more than 0.0 ppm, optionally up to 1.50 ppm and
a titanium content of more than 0.0 ppm, optionally up to 1.00 pppm, and
an ash content of 0.0 - 50.0 ppm, all based on the total amount of the polypropylene composition, characterized in that the ash contains more than 0.0 up to at most 25.0 wt.-%, preferably 1.0 - 20.0 wt.-% or 3.0 - 15.0 wt.-% , based on the total amount of the ash content, of metals (summed up) selected from elements in IUPAC groups 4 up to and including 13 of the periodic table, the metals preferably being aluminium and titan,

(B) extruding the polypropylene composition to a flat film,
(C) orienting the flat film simultaneously in the machine direction and in the transverse direction to obtain the biaxially oriented polypropylene film, and
(D) recovering the biaxially oriented polypropylene film having a dielectric breakdown field strength Eb63.2 of between 550 kV/mm and 630 kV/mm, which is obtained as the Scale parameter $\alpha$ of a fitted two-parameter Weibull distribution based on 50 results, measured with active electrode area of 2.84 $cm^2$ using 250 V/s DC voltage ramp rate on films with a thickness of 3.8-4.2 $\mu$m.

12. The process according to clause 11, wherein the polypropylene composition further comprises equal or above 99.0 wt.-%, based on the total weight of the polypropylene composition, of the homopolymer of propylene and/or from 0.01 to equal or below 1.0 wt.-%, based on the total weight of the polypropylene composition, of additives.

13. The process according to any one of clauses 11 or 12, wherein simultaneous orientation of the flat film in the machine direction and in the transverse direction to obtain the biaxially oriented polypropylene film is conducted in a continuous process and/or wherein the biaxially oriented polypropylene film is a film according to any of the clauses 1 to 9.

14. A slurry polymerisation process for the preparation of a polypropylene homopolymer having a decaline soluble content in the range of 0.0 to 3.5 wt.-%, preferably in the range of 1.0 to 3.0 wt.-% , more preferably in the range of 1.3 to 2.5 wt.-%, wherein the catalyst system comprises:

a) a Ziegler-Natta catalyst,
b) Organoaluminum cocatalyst,
c) External donor of the formula (I)

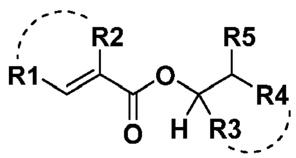
,

wherein

R1 and R2 are independently H or $C_1$-$C_3$ saturated or unsaturated hydrocarbyl, optionally linked together to give one or more cyclic structures; R3 and R4 are independently H or $C_1$-$C_4$ hydrocarbyl, optionally linked together to give one or more cyclic structures;
R5 is H or $C_1$-$C_{12}$ hydrocarbyl,
with the provision that a least one radical of $R_3$-$R_5$ is not a hydrogen.

15. Polypropylene homopolymer according to clauses 9 or 10 obtainable by the process according to clause 14.

## Claims

**1.** Polypropylene homopolymer having

a content of isotactic pentad fraction of from 93.0 to 99.6 %
a melt flow rate $MFR_2$ measured under a load of 2.16 kg at 230 °C according to ISO 1133 from 0.4 to 10.0 g/10 min,
an aluminium content of more than 0.0 ppm to 1.50 ppm and
a titanium content of more than 0.0 ppm as measured according to the method provided in the description, and
an ash content of more than 0.0 to 50.0 ppm as measured according to the method provided in the description, all based on the total amount of the polypropylene composition,
**characterized in that** the ash contains more than 0.0 up to at most 25.0 wt.-%, based on the total amount of the ash content, of the summed-up amount of metals selected from elements in IUPAC groups 4 up to and including 13 of the periodic table.

2. Polypropylene homopolymer according to claim 1, having an aluminium content in the range of 0.30 to 1.30, or 0.50 to 1.25 ppm, and/or

a titanium content of between above 0.0 to 1.00, preferably in the range of 0.20 to 0.75 ppm or 0.30 to 0.70 ppm and/or
a ratio of aluminium to titan within the ash is in the range of 0.8 - 3.0, preferably 1.0 - 2.5 or 1.2 - 2.0

3. A biaxially oriented polypropylene film comprising a polypropylene composition, wherein the polypropylene composition comprises a homopolymer of propylene (A) according to claim 1 or 2.

4. The biaxially oriented polypropylene film according to claim 3, wherein the metals are elements of group 4 and/or of group 13, preferably aluminium and/or titan and optionally present (summed up) in the range 1.0 - 20.0 wt.-% or 3.0 - 15.0 wt.-% based on the total amount of the ash content.

5. The biaxially oriented polypropylene film according to any of claims 3-4,
wherein the polypropylene composition has an ash content of 1.0 - 40.0 or 4.0 - 30.0 ppm.

6. The biaxially oriented polypropylene film according to any one of claims 3-5, wherein the polypropylene composition comprises 95.0 to 99.9 wt.-% of the homopolymer of propylene (A) based on the total weight of the polypropylene composition. and/or the propylene homopolymer (A) has a pentad isotacticity of 96.0 to 98.5 %

7. The biaxially oriented polypropylene film according to any one of the preceding claims 3-6, wherein the film comprises

a layer consisting of the polypropylene composition, optionally comprising a metal layer and/or
the film is stretched simultaneously in machine direction and transverse direction.

8. The biaxially oriented polypropylene film according to any one of claims 3-7 having a dielectric breakdown field strength $E_b63.2$, determined according to DIN IEC 60243-2 and obtained as the Scale parameter $\alpha$ of a fitted two-parameter Weibull distribution based on 50 results, measured with active electrode area of 2.84 $cm^2$ using 250 V/s DC voltage ramp rate on films with a thickness of 3.8-4.2 $\mu$m, of between 550 kV/mm and 630 kV/mm, preferably between 570 kV/mm and 620 kV/mm, or between 580 kV/mm and 610 kV/mm.

9. A capacitor comprising an insulation film comprising a layer of the biaxially oriented polypropylene film according to any of claims 3-8.

10. A process for producing a biaxially oriented polypropylene film comprising the steps of:

(1) providing a polypropylene composition comprising of

a homopolymer of propylene (A) having a content of isotactic pentad fraction of from 93.0 to 98.0 % and a melt flow rate $MFR_2$ measured under a load of 2.16 kg at 230 °C of from 0.4 to 10.0 g/10.0 min, and having an aluminium content of more than 0.0 ppm to 1.50 ppm and
a titanium content of more than 0.0 ppm, optionally up to 1.00 ppm as measured according to the method provided in the description, and
an ash content of more than 0.0 - 50.0 ppm, as measured according to the method provided in the description, all based on the total amount of the polypropylene composition,
**characterized in that** the ash contains more than 0.0 up to at most 25.0 wt.-%, preferably 1.0 - 20.0 wt.-% or 3.0 - 15.0 wt.-% , based on the total amount of the ash content, of the summed up amount of metals selected

from elements in IUPAC groups 4 up to and including 13 of the periodic table, the metals preferably being aluminium and titan,

(2) extruding the polypropylene composition to a flat film,
(3) orienting the flat film simultaneously in the machine direction and in the transverse direction to obtain the biaxially oriented polypropylene film, and
(4) recovering the biaxially oriented polypropylene film having a dielectric breakdown field strength Eb63.2 of between 550 kV/mm and 630 kV/mm, which is obtained as the Scale parameter $\alpha$ of a fitted two-parameter Weibull distribution based on 50 results, measured with active electrode area of 2.84 $cm^2$ using 250 V/s DC voltage ramp rate on films with a thickness of 3.8-4.2 $\mu$m.

**11.** The process according to claim 10, wherein the polypropylene composition further comprises equal or above 99.0 wt.-%, based on the total weight of the polypropylene composition, of the homopolymer of propylene and/or from 0.01 to equal or below 1.0 wt.-%, based on the total weight of the polypropylene composition, of additives.

**12.** The process according to any one of claims 10 or 11, wherein simultaneous orientation of the flat film in the machine direction and in the transverse direction to obtain the biaxially oriented polypropylene film is conducted in a continuous process and/or wherein the biaxially oriented polypropylene film is a film according to any of the claims 3 to 8.

**13.** Polypropylene homopolymer according to claims 1 or 2 obtainable by a slurry polymerisation process for the preparation of a polypropylene homopolymer having a decaline soluble content in the range of 0.0 to 3.5 wt.-%, preferably in the range of 1.0 to 3.0 wt.-% , more preferably in the range of 1.3 to 2.5 wt.-%, wherein the catalyst system comprises:

a) a Ziegler-Natta catalyst,
b) Organoaluminum cocatalyst,
c) External donor of the formula (I)

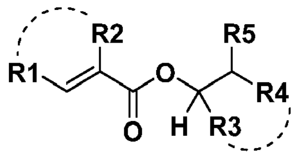
,

wherein

R1 and R2 are independently H or $C_1$-$C_3$ saturated or unsaturated hydrocarbyl, optionally linked together to give one or more cyclic structures; R3 and R4 are independently H or $C_1$-$C_4$ hydrocarbyl, optionally linked together to give one or more cyclic structures;
R5 is H or $C_1$-$C_{12}$ hydrocarbyl,
with the provision that a least one radical of $R_3$-$R_5$ is not a hydrogen.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2701165 A1
- EP 2684676 A1
- EP 2543684 A


### Non-patent literature cited in the description


- *IEEE Transactions on Dielectrics and Electrical Insulation*, 2013, vol. 20 (3), 937-946
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **ZHOU, Z.** ; **KUEMMERLE, R** ; **QIU, X.** ; **REDWINE, D.** ; **CONG, R.** ; **TAHA, A.** ; **BAUGH, D. WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 11289
- **SINGH, G.** ; **KOTHARI, A.** ; **GUPTA, V.** *Polymer Testing*, 2009, vol. 28 (5), 475
- **BUSICO, V.** ; **CARBONNIERE, P.** ; **CIPULLO, R.** ; **PELLECCHIA, R.** ; **SEVERN, J.** ; **TALARICO, G**. *Macromol. Rapid Commun.*, 2007, vol. 28, 11289
- **RESCONI, L.** ; **CAVALLO, L.** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950
- **KAKUGO, M.** ; **NAITO, Y.** ; **MIZUNUMA, K.** ; **MIYATAKE, T.** *Macromolecules*, 1982, vol. 15, 1150